# EUROPÄISCHE PATENTSCHRIFT

(11) **EP 3 727 904 B1**
(45) Veröffentlichungstag und Bekanntmachung des Hinweises auf die Patenterteilung: **14.06.2023**
(21) Anmeldenummer: 18800888.2
(22) Anmeldetag: 07.11.2018
(51) Int. Cl.: B66C 23/62, B60G 3/20, B60K 7/00, B60K 17/34

(54) **MOBILKRAN MIT FAHRWERKACHSE**
MOBILE CRANE WITH AXLE
GRUE AVEC AXE DU CHASSIS

(30) Priorität: 22.12.2017 DE 102017131165
(43) Veröffentlichungstag der Anmeldung: 28.10.2020
(73) Patentinhaber: Manitowoc Crane Group France SAS, 69574 Dardilly Cedex (FR)
(72) Erfinder: BACKES, Bernd, 66649 Oberthal (DE); STÜHRWOLDT, Dieter, 26384 Wilhelmshaven (DE); SCHNITTKER, Frank C., 97074 Würzburg (DE)
(74) Vertreter: SSM Sandmair
(86) Internationale Anmeldenummer: PCT/EP2018/080396
(87) Internationale Veröffentlichungsnummer: WO 2019/120734

(56) Entgegenhaltungen:
- EP-A1- 0 620 132
- EP-A1- 0 701 510
- DE-A1-102015 001 864

## Beschreibung

Die Erfindung betrifft einen Mobilkran mit einem Fahrwerksrahmen mit einer Fahrwerksachse, bei welchem die an den gegenüberliegenden Enden der Achse gelagerten Räder mittels jeweils zumindest einem Querlenker voneinander unabhängig am Fahrwerksrahmen des Mobilkrans aufgehängt sind.

Auf dem Gebiet von Mobilkranen ist die sogenannte "Starrachse" eine weit verbreitete Bauform für die Aufhängung der Fahrwerksräder am Fahrwerksrahmen des Mobilkrans. Bei solchen beispielsweise in der DE 200 20 953 U1 gezeigten Starrachsen sind die Fahrwerksräder zu beiden Seiten des Fahrwerksrahmens an einem gemeinsamen Achsträger gelagert, der wiederum mit dem Fahrwerksrahmen verbunden ist. Diese technische Lösung hat allerdings den Nachteil, dass sich die Räder einer Achse beim Einfedern gegenseitig beeinflussen. Auch nimmt der Achsträger ein erhebliches Bauvolumen in Anspruch, was einerseits zu Lasten des für den Fahrwerksrahmen zur Verfügung stehenden Raums und andererseits zu Lasten der Bodenfreiheit geht.

Um sich dieser Probleme anzunehmen, wurden im Kranbau bereits Lösungen für sogenannte "Einzelradaufhängungen" vorgestellt, bei welchen die Räder einer Fahrwerksachse unabhängig voneinander am Fahrwerksrahmen aufgehängt sind. Beispiele hierfür geben die Druckschriften DE 102015001864 A1, DE 3806709 A1 und DE 102016003885 A1. Diese Lösungen bauen auf eigens für diese Achskonstruktion gestalteten Bauteilen auf, die, sollten sich die Rahmenbedingungen für den Einbau ändern, etwa bei Verwendung an einem anderen Krantyp, erst aufwändig umkonstruiert werden müssen. Im Einzelfall offenbart DE 102015001864 A1 einen Mobilkran mit einem abschnittsweise als Hohlprofil ausgestalteten Fahrwerksrahmen, und mit einer Fahrwerksachse mit voneinander unabhängigen, als Doppelquerlenker EinzelRadaufhängung ausgeführten Aufhängungen, wobei die Aufhängungen jeweils zwei übereinander angeordnete Lenkerebenen mit jeweils zumindest einem Querlenker aufweisen, welche die Radträger an den Fahrwerksrahmen koppeln.

Es ist die Aufgabe der vorliegenden Erfindung, eine Fahrwerksachse für einen Mobilkran bereitzustellen, welche einen möglichst geringen Bauraum beansprucht und zudem einfach an unterschiedliche geometrische Rahmenbedingungen angepasst werden kann.

Diese Aufgabe wird durch den Gegenstand des unabhängigen Patentanspruchs 1 gelöst. Die Unteransprüche definieren dabei bevorzugte Ausführungsformen der vorliegenden Erfindung.

Die Mobilkran-Fahrwerksachse des erfindungsgemäßen Fahrwerks weist voneinander unabhängige Aufhängungen der zu beiden Seiten des Fahrwerksrahmens des Mobilkrans angeordneten Radträger auf, wobei die Aufhängungen wiederum jeweils zumindest einen Querlenker aufweisen. Dieser Querlenker koppelt den jeweiligen Radträger an den Fahrwerksrahmen und ist mit dem Fahrwerksrahmen um eine sich im Wesentlichen parallel zur Längsachse des Fahrwerksrahmens erstreckende Drehachse drehbar verbunden, welche durch zumindest ein Gelenk definiert wird. Die Verbindung zum Fahrwerksrahmen kann dabei durch zumindest ein Drehgelenk erfolgen, wobei hierfür ebenso Kugelgelenke vorstellbar wären. Das erfindungsgemäße Fahrwerk weist ein oder mehrere der hier beschriebenen Fahrwerksachsen auf, die wiederum jeweils zwei Radaufhängungen zu beiden Seiten des Fahrwerksrahmens umfasst/umfassen.

Mit anderen Worten wird zur Aufhängung der Fahrwerksräder an beiden Seiten der Fahrwerksachse zumindest ein Querlenker bereitgestellt, so dass die jeweiligen Räder durch diesen zumindest einen Querlenker beim Ein- und Ausfedern relativ zum Fahrwerksrahmen geführt werden, ohne sich dabei gegenseitig zu beeinflussen. Beim Ein- und Ausfedern der Räder bewegen sich die Querlenker im Wesentlichen parallel zu sich im Wesentlichen senkrecht zur horizontalen Längsachse des Fahrwerksrahmens erstreckenden Ebenen.

Gemäß einer bevorzugten Ausführungsform ist die erfindungsgemäße Fahrwerksachse als Doppelquerlenker-Achse, die Aufhängungen also als Doppelquerlenker-Aufhängungen ausgeführt, so dass die Radträger über zumindest zwei übereinanderliegende Querlenker an den Fahrwerksrahmen gekoppelt sind. Die vertikale Lage der übereinanderliegenden Querlenker innerhalb der jeweiligen Aufhängung der erfindungsgemäßen Fahrwerksachse kann dabei jeweils eine Ebene definieren, welche im Folgenden als Lenkerebene innerhalb der jeweiligen Aufhängungen der erfindungsgemäßen Fahrwerksachse bezeichnet wird.

Grundsätzlich kann die erfindungsgemäße Fahrwerksachse als sogenannte "Mehrlenkerachse" ausgeführt werden, bei welcher die jeweiligen Radträger über zumindest einen Querlenker und weitere Lenker gegenüber dem Fahrwerksrahmen geführt sind. Die weiteren Lenker sind dabei bevorzugt als Stablenker ausgeführt, welche über jeweils ein Gelenk mit dem Radträger und dem Fahrwerksrahmen verbunden sind. Die weiteren Lenker können demnach als Längslenker mit einer im Wesentlichen senkrecht zur Rahmenlängsachse verlaufenden Drehachse gegenüber dem Fahrwerksrahmen ausgestaltet sein, ebenso wie als Schräglenker mit einer relativ zur Rahmenlängsachse schräg verlaufenden Drehachse.

Was den oder die erfindungsgemäß zum Einsatz kommenden Querlenker betrifft, kommen als Bauform grundsätzlich Stablenker mit jeweils einem Lager am Fahrwerksrahmen und am Radträger in Betracht, ebenso wie Dreieckslenker mit einem Lager zum Radträger und zwei Lagern am Rahmen. Auch wäre ein sogenannter Viereckslenker, insbesondere ein Trapezlenker oder ein Parallellenker vorstellbar, mit jeweils zwei Lagern am Radträger und am Rahmen.

Gemäß einer bevorzugten Ausführungsform der Fahrwerksachse weist jede Lenkerebene der Doppelquerlenker-Radaufhängung je einen Dreieckslenker oder Viereckslenker auf, wobei zumindest eine Lenkerebene, insbesondere eine obere Lenkerebene einen weiteren Stablenker aufweist. Dieser weitere Stablenker kann bevorzugterweise wiederum als Querlenker ausgestaltet sein.

Gemäß einer weiteren bevorzugten Ausführungsform der Fahrwerksachse weist eine erste Lenkerebene, insbesondere eine untere Lenkerebene einen Dreieckslenker oder Viereckslenker auf, wobei eine zweite Lenkerebene, insbesondere eine obere Lenkerebene zwei Stablenker aufweist. Ferner kann die zweite Lenkerebene einen als Stablenker ausgeführten Längs- oder Schräglenker aufweisen, über welchen das Brems- und Antriebsmoment abgestützt wird.

Auch können die Aufhängungen der Fahrwerksachse so gestaltet sein, dass sich zumindest ein Querlenker, insbesondere ein Querlenker der unteren Lenkerebene, vom Radträger ausgehend bis in den Mittelbereich des Fahrwerksrahmens erstreckt, also so weit wie möglich zur vertikalen Mittelebene des Fahrwerksrahmens hin. Darüber hinaus können die Aufhängungen der Fahrwerksachse auch so gestaltet sein, dass sich zumindest ein Querlenker, insbesondere ein Querlenker der oberen Lenkerebene, vom Radträger ausgehend bis zu einer vertikalen Seitenwand des Fahrwerksrahmens erstreckt.

In Kombination mit einem ersten erfindungsgemäßen Aspekt, nämlich der voranstehend beschriebenen Querlenker-Einzelradaufhängung, kann die vorliegende Erfindung auch einen weiteren erfindungsgemäßen Aspekt umfassen, nämlich einen wie nachfolgend beschriebenen Radträger. An dieser Stelle sei darauf hingewiesen, dass ein solcher Radträger eine eigenständige, von den weiteren hier beschriebenen Aspekten unabhängige Erfindung sein kann. Sämtliche hier beschriebene Aspekte können für sich betrachtet als eigenständige Erfindungen angesehen werden oder aber auch in jeglicher sinnvollen Kombination zusammenwirken. Das vorgeschlagene Fahrwerkskonzept kann als strukturelles Element insbesondere Radträger umfassen, um ein technisch ausführbares System mit funktionalen Zusammenhängen zwischen den einzelnen Strukturkomponenten darzustellen.

Der erfindungsgemäße Radträger für ein Mobilkran-Fahrwerk ist zum Anschluss der Energieversorgung bzw. Leistungsversorgung eines Radnabenantriebs zum Antrieb des am Radträger gelagerten Rades ausgestaltet, wobei der Radnabenantrieb einen Elektromotor oder einen Hydraulikmotor umfasst. Mit anderen Worten trägt bereits jeder Radträger den zum Radantrieb notwendigen Motor sowie dessen Versorgungsanschlüsse, so dass ein konventioneller Antriebsstrang mit zentralem Antriebsmotor, einem oder mehreren Getrieben, und bis zu den Radträgern reichenden Antriebswellen entfallen kann. Der erfindungsgemäße Radnabenantrieb kann dabei als Direktantrieb oder aber auch mit einem dem Motor nachgeschalteten Planetengetriebe sowie einer Lamellenbremseinrichtung als Park- und Betriebsbremse ausgestaltet sein.

Gemäß einer bevorzugten Ausführungsform des erfindungsgemäßen Radträgers kann dieser über einen Lagerkopf verfügen, der am eigentlichen Radträgerkörper über ein Gelenk, insbesondere ein Drehgelenk gelagert ist. An diesem Lagerkopf kann dann ein Federungszylinder der Radaufhängung oder auch zumindest ein Lenker der Radaufhängung angreifen. Da der Lagerkopf mit dem Radträgerkörper über ein Gelenk verbunden ist, ist eine kinematische Entkoppelung des Lagerkopfes von den Bewegungen des Radträgerkörpers möglich. Anders ausgedrückt wird sich der Lagerkopf etwa beim Lenkeinschlag nicht mit dem Radträgerkörper mitdrehen, sondern verbleibt im Wesentlichen in seiner ursprünglichen Stellung. Dies ermöglicht nicht nur eine einfache Anbindung von Aufhängungsteilen an den Lagerkopf und somit an den Radträgerkörper, wie etwa von Federungszylindern oder von Lenkern, sondern ermöglicht zudem auch einen bezüglich Position und Ausrichtung mechanisch sicheren Anschluss einer Energie- bzw. Leistungsversorgung für den Radnabenantrieb. Je nach Ausgestaltung des Antriebsmotors als Elektromotor oder Hydraulikmotor umfasst eine solche Versorgung innenliegende elektrisch leitende oder fluidführende Leitungen, welche durch den lagestabilen Anschluss an den gelenkig mit dem Radträgerkörper verbundenen Lagerkopf geringeren mechanischen Belastungen ausgesetzt sind, als dies bei einem direkten Anschluss an einen fest mit der Radnabe verbundenen Radträger der Fall wäre. Zur Übertragung der Energie oder Leistung an den fest mit dem Radträger verbundenen Antriebsmotor ist allerdings eine Durchführung vom Lagerkopf auf den Radträgerkörper notwendig. Gemäß einer bevorzugten Ausführungsform der Erfindung ist diese als sogenannte Drehdurchführung mit Schleifkontakten/Schleifringen für eine elektrische Lösung bzw. mit Nuten/Bohrungen für eine hydraulische Lösung realisiert und wird weiter untenstehend näher beschrieben.

Der elektrische oder der hydraulische Antrieb bietet die Möglichkeit, die kinetische Energie des Fahrzeugs beim Verzögern zurückzugewinnen, indem die Radantriebe in den Pumpen- bzw. Generatorbetrieb fallen und die so zurückgewonnene Energie in einer Speichereinrichtung wie etwa einem Hydro-Speicher oder elektrischen Akkumulator gespeichert werden kann. Der hydraulische oder elektromechanische Antrieb ermöglicht im Pumpen- bzw. Generatorbetrieb einen verschleißfreien generatorischen bzw. hydraulischen Bremseffekt und spart durch geregelte zusätzliche Energieentnahme aus der Speichereinrichtung Kraftstoff beim Beschleunigen.

Die elektrische Lösung schafft zusätzlich die Möglichkeit für einen emissionsfreien Betrieb innerhalb von Gebäuden, indem der Fahrzeugantrieb entweder vollständig aus dem bordeigenen elektrischen Akkumulator gespeist wird, oder indem der Fahrzeugantrieb mit externen Energiezuführungen, wie etwa einem Netz- oder Trafokabelanschluss lösbar verbunden wird. Diese "in-house" Betriebsart ist insbesondere dann vorteilhaft, wenn der Antrieb dort auf ebenem Untergrund und mit geringen Geschwindigkeiten erfolgt. In Kombination mit rein elektrisch betriebenen Oberwagenfunktionen wird damit ein voll- oder teilhybrider Antrieb aller wesentlichen Kranfunktionen möglich.

Ein weiterer Aspekt, der einen der vorgenannten Aspekte ergänzen kann, betrifft eine im Folgenden beschriebene Zusammenführung der Spurstangen und der Lenkstangen zu kombinierten Fahrwerkselementen, die im Folgenden als Lenk-Spur-Stangen bezeichnet werden sollen. Die kombinierte Lenk-Spur-Stange kann in der Ebene des unteren Dreieckslenkers angeordnet sein, um den sich einstellenden Lenkfehler zu minimieren.

Auch können die Lenk-Spur-Stangen einer Fahrwerksachse im Wesentlichen die Länge der jeweiligen in der unteren Lenkerebene angeordneten Querlenker aufweisen, was ebenso zur Minimierung der sich beim Ein- und Ausfedern einstellenden Lenkfehler beiträgt.

Das auf die konstruktive Mittelachse des Fahrwerksrahmens bezogene mittig angeordnete Lenkgetriebe kann dabei durch hydraulische oder elektromechanische Zylinder betätigt werden. Lenkaktivierung, Spurhaltung und Dreieckslenker können somit in einer Ebene liegen, um vorgenannte Fehler der Fahrwerksdynamik zu minimieren.

Ein weiterer Aspekt, der einen der vorgenannten Aspekte möglich macht bzw. ergänzen kann, betrifft den im Folgenden beschriebenen Mobilkran-Fahrwerksrahmen.

Der erfindungsgemäße Fahrwerksrahmen für einen Mobilkran ist über seine Länge hinweg zumindest abschnittsweise als Hohlprofil ausgestaltet und kann ferner bezogen auf eine vertikale Mittelebene symmetrisch oder aber auch asymmetrisch ausgeführt sein. Zusätzlich zu einer im Wesentlichen horizontalen Profilober- und Profilunterseite weist das erfindungsgemäße Profil vertikale oder gewinkelte Profilseiten auf, welche auf der jeweiligen Rahmenseite die Profiloberseite mit der Profilunterseite verbinden und zusammen mit diesen ein Hohlprofil bilden. Diese Profilseiten sind aus zumindest zwei, vorzugsweise mehreren einzelnen Profilsegmenten aufgebaut, welche erfindungsgemäß so miteinander verbunden sind, dass sich die horizontale Breite des Profils von der Profilunterseite ausgehend bis zu einer vorbestimmten vertikalen Höhe des Fahrwerksrahmens vergrößert. Dabei ist es denkbar, dass die Rahmenbreite über zumindest einen Höhenabschnitt konstant bleibt. Ebenso kann die Rahmenbreite nach oben hin stets zunehmen, wenn auch in unterschiedlichen Höhenabschnitten in unterschiedlichem Maße. Oberhalb der vorbestimmten Höhe ist wieder ein beliebiger Querschnittsverlauf des Fahrwerksrahmens möglich, so auch eine Abnahme der Rahmenbreite über zumindest einen Höhenabschnitt hinweg. Grundsätzlich wäre auch hier neben einem symmetrischen Profil ein bezogen auf die Mittelebene des Fahrwerksrahmens asymmetrisches Profil vorstellbar.

Dabei ist es denkbar, dass einzelne Profilsegmente als gerade Profilsegmente ausgestaltet sind, wobei ebenso bezogen auf die konstruktive Vertikalachse des Fahrwerksrahmens nach innen oder nach außen abgewinkelte Profilsegmente vorstellbar sind. Zudem können die Profilsegmente direkt aneinander anstoßen, allerdings sind auch in einem Winkel zueinander stehende Zwischensegmente vorstellbar, welche zwischen einzelnen Profilsegmenten einen gewissen Übergangsradius im Profil darstellen.

Der voranstehend beschriebene Mobilkran-Fahrwerksrahmen erlaubt es, in Verbindung mit der erfindungsgemäßen Fahrwerksachse den maximalen zur Verfügung gestellten Bauraum auszunutzen, und ermöglicht insbesondere einen gegenüber bekannten Lösungen tragfähigeren und leichteren Kran-Unterwagen.

Die Erfindung wird im Folgenden anhand bevorzugter Ausführungsformen der erfindungsgemäßen Aspekte näher beschrieben. Sie kann einzelne Merkmale aber auch jegliche sinnvolle Kombination aus mehreren Merkmalen aus beliebigen Aspekten der Erfindung enthalten.

Es zeigen:
- Figur 1:: eine Ansicht der an einem Kran-Fahrwerksrahmen montierten erfindungsgemäßen Mobilkran-Fahrwerksachse von unten;
- Figur 2:: eine Schnittansicht durch den erfindungsgemäßen Mobilkran-Radträger;

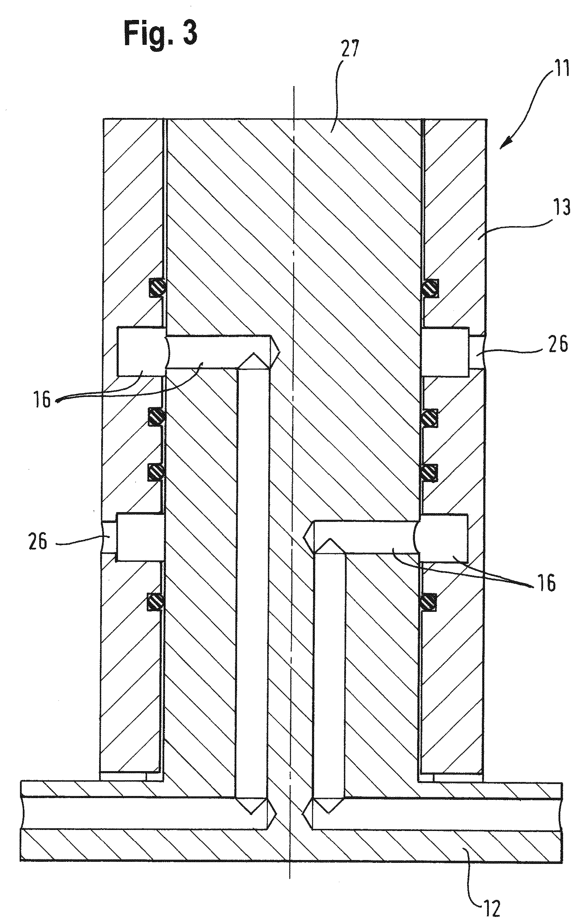

- Figur 3:: eine Detailansicht einer Drehlagerung des Radträgers aus der Figur 2;
- Figur 4:: eine Schnittansicht des erfindungsgemäßen Mobilkran-Fahrwerksrahmens.

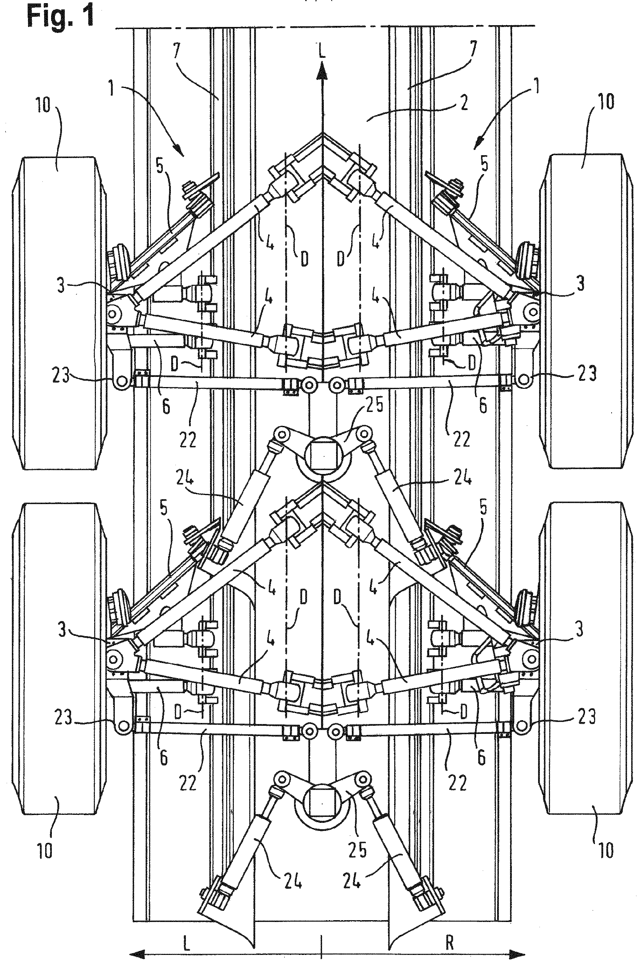

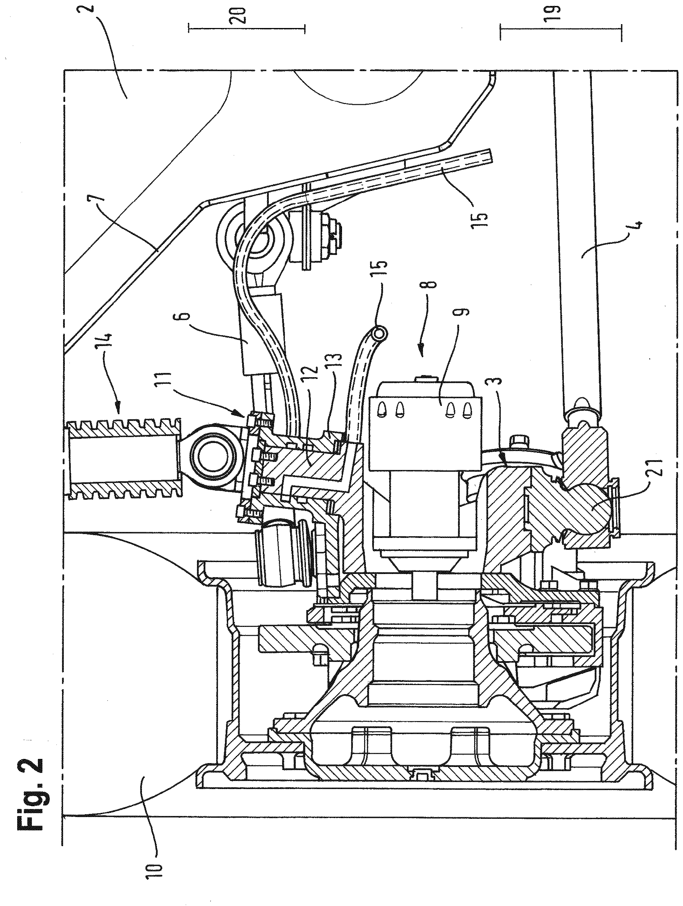

Die Figur 1 zeigt in einer beispielhaften Ansicht zwei identische Fahrwerksachsen gemäß dem ersten Aspekt der vorliegenden Erfindung, welche an einem Mobilkran-Fahrwerksrahmen gemäß einem weiteren Aspekt der vorliegenden Erfindung montiert sind. Jede der Fahrwerksachsen ist als Doppelquerlenker-Fahrwerksachse ausgestaltet, wobei in einer unteren Lenkerebene 19 (siehe Figur 2) ein als Dreieckslenker ausgebildeter Querlenker 4 angeordnet ist, welcher über zwei beabstandete und nahe der Rahmenmitte befindliche Drehgelenklager am Fahrwerksrahmen 2 angreift. Die globale Drehachse D des Dreieckslenkers 4 verläuft somit parallel zur Rahmenlängsachse L. Am äußeren Ende ist der Dreieckslenker 4 über ein Kugelgelenk 21 (siehe Figur 2) mit dem Radträger 3 drehbar gekoppelt. In der unteren Lenkerebene 19 sind ferner die kombinierten Lenk-Spur-Stangen 22 angeordnet, welche über die Lenkhebel 23 am Radträger 3 angreifen. Ein gegenläufiges Ein- bzw. Ausfahren der Lenkzylinder 24 bewirkt über den Zentrallenkhebel 25 und die mit ihm verbundenen Lenk-Spur-Stangen 22 einen Lenkeinschlag der Räder 10 der betreffenden Fahrzeugachse. Ein Verdrehen des Radträgers 3 beim Lenkeinschlag wird in der unteren Lenkerebene 19 durch das Kugelgelenk 21 am unteren Dreieckslenker 4 ermöglicht, in der oberen Lenkerebene 20 hingegen durch das Drehgelenk 11, das zwischen dem Radträgerkörper 12 und dem Lagerkopf 13 ausgebildet ist.

In der oberen Lenkerebene 20 weist die gezeigte Ausführungsform ebenfalls einen Dreieckslenker 5 auf, der ebenso wie der Stablenker 6 als Querlenker ausgebildet ist und mit diesem am Fahrwerksrahmen 2 um eine gemeinsame Drehachse D verschwenkt wird, sobald das entsprechende Rad 10 ein- oder ausfedert. Da das Drehgelenk 11 keine Rotation um eine horizontale Drehachse zulässt, sind die Querlenker 5 und 6 ebenso wie der Federungszylinder 14 über nicht weiter bezeichnete Kugel- bzw. Drehgelenke mit dem Lagerkopf 13 gekoppelt. Rahmenseitig sind der Federungszylinder 14 und die Querlenker 5 und 6 ebenso über Drehgelenke gelagert.

Aus den Figuren 1 und 2 ist ersichtlich, dass die Führung der relativ langen unteren Dreieckslenker 4 unterhalb des Fahrwerksrahmens 2 und die starke Verkürzung der oberen Querlenker 5 und 6 eine gegenüber herkömmlichen Lösungen starke Aufweitung des Fahrwerksrahmens 2 in die Breite ebenso wie in die Tiefe ermöglicht, ohne hierfür im Fahrwerksrahmen 2 Durchbrüche oder Ausnehmungen für die Lenker oder andere Fahrwerksteile vorsehen zu müssen. Durch den über die Rahmenlänge hinweg konstanten und dennoch sehr aufgeweiteten Rahmenquerschnitt wird ein gegenüber herkömmlichen Lösungen äußerst leicht bauender und dennoch sehr tragfähiger Kran-Unterwagen geschaffen. Zudem ermöglicht die erfindungsgemäße Konstruktion der Fahrwerksachse als Doppelquerlenker-Achse einen hohen Verwendungsgrad von standardisierten Bauteilen, was nicht nur eine leicht bauende und kostengünstige Fahrwerksachse ermöglicht, sondern vor allen Dingen eine hohe und unaufwändige Adaptierbarkeit auf unterschiedliche Krantypen mit verschiedenen geometrischen Rahmenbedingungen für die Fahrwerksachse.

In der Figur 2 ist ein Querschnitt durch einen erfindungsgemäßen Radträger 3 zu sehen, welcher einen zweiten Aspekt der vorliegenden Erfindung darstellt. Der erfindungsgemäße Radträger 3 weist einen eigenen Antrieb für das von ihm gelagerte Rad 10 in Form eines Radnabenantriebs 8 auf. In der gezeigten Ausführungsform umfasst der Radnabenantrieb 8 einen Hydraulikmotor 9, welcher vom Radträger 3 koaxial zum Rad 10 getragen wird und dieses über ein Planetengetriebe und eine schaltbare Kupplung antreibt. Zur Leistungsversorgung des Motors 9 ist eine hydraulische Leistungsversorgung 15 mit einer hydraulischen Zuführung und Abführung des dafür vorgesehenen Hydrauliköls bereitgestellt. Der Anschluss der vom Fahrwerksrahmen 2 des Kran-Unterwagens kommenden Hydraulikleitung erfolgt direkt am Lagerkopf 13, welcher gegenüber dem Federungszylinder 14 und den Querlenkern 5 und 6 im Wesentlichen ortsstabil bleibt, sobald das Rad 10 zusammen mit dem Radträger 3 einen Lenkeinschlag erfährt. Folglich ist die durch Lenkeinschläge bedingte Belastung der zum Lagerkopf 13 führenden Hydraulikleitung vernachlässigbar klein. Die Fortführung des Hydrauliköls zum Hydraulikmotor 9 erfolgt sodann über eine Drehdurchführung 16 im Drehgelenk 11. Hierfür sind in der zylindrischen Innenfläche des Lagerkopfs 13 für die Ölzuführung ebenso wie für Ölabführung Ringnuten eingearbeitet, welche im Zusammenspiel mit Radialbohrungen und daran anschließende Axialbohrungen im zylindrischen Lagerzapfen 27 des Radträgerkörpers 12 eine Durchführung des Hydrauliköls über die relativ zueinander drehenden Elemente Lagerkopf 13 und Radträgerkörper 12 bilden. Von den Bohrungen im Radträgerkörper 12 aus kann der gegenüber dem Radträger 3 ortsfeste Motor 9 über statische Hydraulikleitungen versorgt werden. Die Rückführung des vom Motor 9 ausgehenden Öls in Richtung des Fahrwerksrahmens 2 erfolgt bei der gezeigten Ausführungsform in identischer Weise wie die Zuführung.

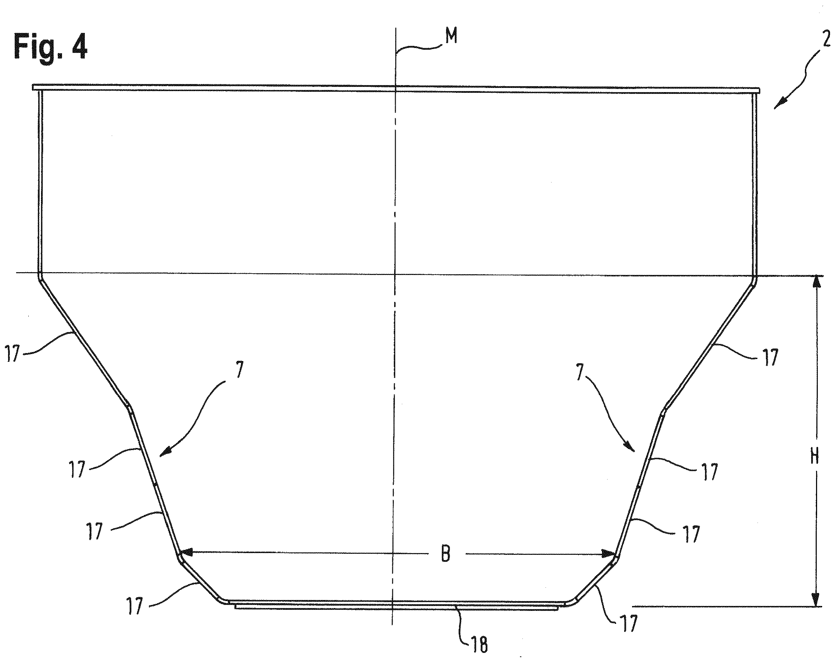

Die Figur 4 zeigt einen weiteren Aspekt der vorliegenden Erfindung, nämlich einen als Hohlprofil ausgestalteten Mobilkran-Fahrwerksrahmen 2, welcher im unteren Bereich bis zu einer vorbestimmten Höhe H eine nach oben hin stets zunehmende Rahmenbreite B aufweist.

Hierfür ist der zur vertikalen Symmetrieebene M symmetrische Rahmen 2 im unteren Bereich aus mehreren Profilsegmenten 17 aufgebaut, welche so miteinander verbunden sind, dass die durch sie gebildeten Profilwände 7 sich nach oben hin aufweiten. Gegenüber der Seitenwand 7 als Gesamtes gesehen, bilden die einzelnen Profilsegmente ein versteifendes Zick-Zack-Muster aus, die Rahmenseite B nimmt also in abwechselnd starkem Maße nach oben hin zu. Oberhalb der vordefinierten Höhe H kann der Rahmen 2 eine konstante Breite aufweisen, wobei ebenso eine zumindest abschnittsweise zunehmende oder aber auch abnehmende Breite vorstellbar ist. Das gemäß der vorliegenden Erfindung gebildete Hohlprofil des Rahmens 2 nutzt somit den ihm von den Fahrwerksachsen ermöglichten Bauraum maximal aus. Ein in der Figur 1 gezeigter konstanter Profilquerschnitt ohne abschnittsweise vorgesehene Ausnehmungen oder Durchbrüche trägt bei vorgegebenem Materialeinsatz für den Kran-Unterwagen entscheidend zur Tragfähigkeit des Rahmens 2 bei.

### Bezugszeichenliste:

- 1: Aufhängung
- 2: Fahrwerksrahmen
- 3: Radträger
- 4, 5, 6: Querlenker
- 7: Seitenwand
- 8: Radnabenantrieb
- 9: Elektro-/Hydraulikmotor
- 10: Rad
- 11: Drehgelenk
- 12: Radträgerkörper
- 13: Lagerkopf
- 14: Aufhängungs-Federungszylinder
- 15: Leistungsversorgung
- 16: Drehdurchführung
- 17: Profilsegment
- 18: Profilunterseite
- 19: Untere Lenkerebene
- 20: Obere Lenkerebene
- 21: Kugelgelenk
- 22: Lenk-Spur-Stange
- 23: Lenkhebel
- 24: Lenkzylinder
- 25: Zentrallenkhebel
- M: Rahmen-Symmetrieebene
- D: Querlenker-Drehachse
- L: Rahmen-Längsachse

## Patentansprüche

1. Mobilkran mit
- einem zumindest abschnittsweise als Hohlprofil ausgestalteten Fahrwerksrahmen (2), dessen vertikale Profilseiten (7) zumindest über die Aufhängungen (1) von zu beiden Seiten (L, R) des Fahrwerksrahmens (2) angeordneten Radträgern (3) hinaus bis zu einer vorbestimmten Höhe (H) aus mehreren Profilsegmenten (17) gebildet sind, die so miteinander verbunden sind, dass sich die horizontale Breite (B) des Profils von der Profilunterseite (18) ausgehend vergrößert, und
- zumindest einer Fahrwerksachse mit voneinander unabhängigen, als Doppelquerlenker-Radaufhängung ausgeführten Aufhängungen (1), wobei die Aufhängungen (1) jeweils zwei übereinander angeordnete Lenkerebenen mit jeweils zumindest einem Querlenker (4, 5, 6) aufweisen, welche die Radträger (3) an den Fahrwerksrahmen (2) koppeln und welche mit dem Fahrwerksrahmen (2) um eine sich im Wesentlichen parallel zur Längsachse (L) des Fahrwerksrahmens (2) erstreckende Achse (D) drehbar verbunden sind, wobei sich die Querlenker (5, 6) der oberen Lenkerebene vom Radträger (3) ausgehend bis zu den vertikalen Profilseiten (7) des Fahrwerksrahmens (2) erstrecken.

2. Mobilkran gemäß Anspruch 1, wobei zumindest ein Querlenker (4, 5, 6), insbesondere zumindest ein Querlenker (4, 5, 6) jeder Lenkerebene als Stablenker, Dreieckslenker oder Viereckslenker ausgestaltet ist.

3. Mobilkran gemäß einem der Ansprüche 1 oder 2, wobei jede Lenkerebene je einen Dreieckslenker (4, 5) aufweist, und wobei zumindest eine Lenkerebene, insbesondere eine obere Lenkerebene einen weiteren Stablenker (6) aufweist.

4. Mobilkran gemäß einem der Ansprüche 1 oder 2, wobei eine erste Lenkerebene, insbesondere eine untere Lenkerebene einen Dreieckslenker (4, 5) aufweist, und wobei eine zweite Lenkerebene, insbesondere eine obere Lenkerebene zumindest einen Stablenker (6), und im speziellen weiter einen als Stablenker ausgeführten Längs- oder Schräglenker aufweist.

5. Mobilkran gemäß einem der Ansprüche 1 bis 4, wobei die Aufhängungen (1) so ausgestaltet sind, dass sich zumindest ein Querlenker (4), insbesondere ein Querlenker (4) der unteren Lenkerebene vom Radträger (3) ausgehend bis in den Mittelbereich des Fahrwerksrahmens (2) erstreckt.

6. Mobilkran gemäß einem der Ansprüche 1 bis 5, mit kombinierten, die Funktion von Lenkstangen und Spurstangen erfüllenden Fahrwerkselementen (22), welche insbesondere im Wesentlichen in der unteren Lenkerebene angeordnet sind, und/oder im Wesentlichen die Länge der in der unteren Lenkerebene angeordneten Querlenker (4) aufweisen, und im Speziellen mittels eines mittig zum Fahrwerksrahmen (2) angeordneten Lenkgetriebes (24, 25) betätigt werden.

7. Mobilkran gemäß einem der Ansprüche 1 bis 6, wobei der Radträger (3) zum Anschluss eines Radnabenantriebs (8) mit einem Elektromotor (9) oder einem Hydraulikmotor (9) zum Antrieb des jeweiligen Rades (10) ausgestaltet ist.

8. Mobilkran gemäß Anspruch 7, wobei der Radträger (3) einen über ein Gelenk (11), insbesondere ein Drehgelenk (11) am Radträgerkörper (12) gelagerten Lagerkopf (13) umfasst, an dem ein Federungszylinder (14) und/oder zumindest ein Lenker (4, 5, 6) angreift, wobei der Lagerkopf (13) einen Anschluss (14) für die Energieversorgung (15) des Radnabenantriebs (8) aufweist, und wobei das Gelenk (11) eine Durchführung (16) der Energieversorgung (15) zum Radträgerkörper (12) umfasst.

## Claims

1. A mobile crane comprising
a drive assembly frame (2) which is configured at least in sections as a hollow profile, wherein the vertical profile sides (7) of the drive assembly frame (2) are formed from multiple profile segments (17), at least beyond the suspensions (1) of wheel carriers (3) arranged on both sides (L, R) of the drive assembly frame (2) up to a predetermined height (H), wherein the profile segments (17) are connected to each other such that the horizontal width (B) of the profile increases from the lower side (18) of the profile;
- at least one drive assembly axle, comprising mutually independent suspensions (1) embodied as double transverse control arm wheel suspensions, wherein the suspensions (1) each comprise two control arm planes which are arranged one above the other and which each comprise at least one transverse control arm (4, 5, 6) which couple the wheel carriers (3) onto the drive assembly frame (2) and are connected to the drive assembly frame (2) such that they can be rotated about an axis (D) which extends substantially parallel to the longitudinal axis (L) of the drive assembly frame (2), wherein the transverse control arms (5, 6) of the upper control arm plane extend from the wheel carrier (3) up to a vertical profile side (7) of the drive assembly frame (2).

2. The mobile crane drive assembly axle according to Claim 1, wherein at least one transverse control arm (4, 5, 6), in particular at least one transverse control arm (4, 5, 6) of each control arm plane, is configured as a control rod, a triangular control arm or a quadrilateral control arm.

3. The mobile crane drive assembly axle according to any one of Claims 1 and 2, wherein each control arm plane comprises one triangular control arm (4, 5) each, and wherein at least one control arm plane, in particular an upper control arm plane, comprises another control rod (6).

4. The mobile crane drive assembly axle according to any one of Claims 1 and 2, wherein a first control arm plane, in particular a lower control arm plane, comprises a triangular control arm (4, 5), and wherein a second control arm plane, in particular an upper control arm plane, comprises at least one control rod (6) and specifically further comprises a longitudinal or oblique control arm which is embodied as a control rod.

5. The mobile crane drive assembly axle according to any one of Claims 1 to 4, wherein the suspensions (1) are configured such that at least one transverse control arm (4), in particular a transverse control arm (4) of the lower control arm plane, extends from the wheel carrier (3) up to and into the central region of the drive assembly frame (2).

6. The mobile crane drive assembly axle according to any one of Claims 1 to 5, comprising combined drive assembly elements (22) which perform the function of steering rods and track rods and which are in particular arranged substantially in the lower control arm plane and/or substantially exhibit the length of the transverse control arms (4) arranged in the lower control arm plane and are specifically actuated by means of a steering gear (24, 25) arranged centrally with respect to the drive assembly frame (2).

7. The mobile crane drive assembly axle according to any one of Claims 1 to 6, wherein the wheel carrier (3) is configured to connect a wheel hub drive (8) comprising an electric motor (9) or a hydraulic motor (9) for driving the respective wheel (10).

8. The mobile crane drive assembly axle according to Claim 7, wherein the wheel carrier (3) comprises a bearing head (13) which is mounted on the wheel carrier body (12) via a joint (11), in particular a rotary joint (11), and on which a spring suspension cylinder (14) and/or at least one control arm (4, 5, 6) acts, wherein the bearing head (13) comprises a connection (14) for the energy supply (15) of the wheel hub drive (8), and wherein the joint (11) comprises a feedthrough (16) for the energy supply (15) to the wheel carrier body (12).

## Revendications

1. Grue mobile comportant :
- un bâti de châssis (2) réalisé au moins en partie sous la forme d'un profilé creux dont les côtés verticaux (7) sont formés par plusieurs segments de profilé (17), au moins au-delà des suspensions (1) de porte-fusées (3) installés des deux côtés (L, R) du bâti de châssis (2), jusqu'à une hauteur (H) prédéterminée, lesquels segments sont reliés entre eux de telle manière que la largeur horizontale (B) du profil va croissant à partir du dessous (18) du profilé, et
- au moins un essieu de châssis doté de suspensions (1) indépendantes les unes des autres et réalisées sous la forme d'une suspension à double triangulation, lesdites suspensions (1) présentant chacune deux plans de bras de suspension superposés dotés chacun d'au moins un bras oscillant transversal (4, 5, 6) et qui accouplent les porte-fusées (3) au bâti de châssis (2) et qui sont raccordés rotatifs au bâti de châssis (2) sur un axe (D) sensiblement parallèle à l'axe longitudinal (L) du bâti de châssis (2), lesdits bras oscillants transversaux (5, 6) du plan supérieur de bras de suspension s'étendant depuis le porte-fusée (3) jusqu'aux côtés verticaux (7) du profilé du bâti de châssis (2).

2. Grue mobile selon la revendication 1, dans laquelle au moins un bras oscillant transversal (4, 5, 6), notamment au moins un bras oscillant transversal (4, 5, 6) de chaque plan de bras de suspension, est réalisé sous la forme d'un bras de suspension direct, d'un bras de suspension triangulaire ou d'un bras de suspension quadrangulaire.

3. Grue mobile selon l'une des revendications 1 et 2, dans laquelle chaque plan de bras de suspension présente un bras de suspension triangulaire (4, 5), et dans laquelle au moins un plan de bras de suspension, notamment un plan supérieur de bras de suspension, présente un bras de suspension direct (6) supplémentaire.

4. Grue mobile selon l'une des revendications 1 et 2, dans laquelle un premier plan de bras de suspension, notamment un plan inférieur de bras de suspension, présente un bras de suspension triangulaire (4, 5), et dans laquelle un deuxième plan de bras de suspension, notamment un plan supérieur de bras de suspension, présente au moins un bras de suspension direct (6), et plus particulièrement en outre un bras longitudinal ou oblique réalisé sous la forme d'un bras de suspension direct.

5. Grue mobile selon l'une des revendications 1 à 4, dans laquelle les suspensions (1) sont réalisées de telle manière qu'au moins un bras oscillant transversal (4), notamment un bras oscillant transversal (4) du plan inférieur de bras de suspension, s'étend depuis le porte-fusée (3) jusqu'au milieu du bâti de châssis (2).

6. Grue mobile selon l'une des revendications 1 à 5, présentant, combinés, des éléments de châssis (22) assurant la fonction de barres directrices et barres d'accouplement, lesquels sont agencés notamment sensiblement dans le plan inférieur de bras de suspension et/ou ayant sensiblement la longueur du bras oscillant transversal (4) agencé dans le plan inférieur de bras de suspension, et plus particulièrement susceptibles d'être actionnés au moyen d'un boîtier de direction (24, 25) agencé au milieu du bâti de châssis (2).

7. Grue mobile selon l'une des revendications 1 à 6, dans laquelle le porte-fusée (3) est conçu pour le raccord d'un système de motorisation de moyeu (8) à un moteur électrique (9) ou à un moteur hydraulique (9) pour l'entraînement de sa roue (10) respective.

8. Grue mobile selon la revendication 7, dans laquelle le porte-fusée (3) comprend une tête de palier (13) montée sur le corps de porte-fusée (12) par le biais d'une articulation (11), notamment une articulation pivotante (11), au niveau de laquelle tête de palier viennent se greffer un vérin de suspension (14) et/ou au moins un bras de suspension (4, 5, 6) ; dans laquelle la tête de palier (13) présente un raccord (14) pour le système d'alimentation en énergie (15) du système de motorisation de moyeu (8), et dans laquelle l'articulation (11) comprend une traversée (16) du système d'alimentation en énergie (15) dirigée vers le corps de porte-fusée (12).
